# EUROPEAN PATENT APPLICATION

(11) **EP 4 841 379 A1**
(43) Date of publication of application: **18.11.2026**
(21) Application number: 25182229.2
(22) Date of filing: 12.06.2025
(51) Int. Cl.: G05D 1/224, G05D 1/227, G05D 109/25

(54) **MULTI-REMOTE CONTROL SYSTEM FOR UNMANNED VEHICLES**

(30) Priority: 12.05.2025 TW 114117771
(71) Applicant: Soaring One Electronics and Power Co., Ltd., Tainan City 709015 (TW)
(72) Inventor: TSENG, PO-HSIANG, 704006 Tainan City (TW); TSENG, CHIA-FU, 704006 Tainan City (TW)
(74) Representative: Jannig & Repkow Patentanwälte PartG mbB

(57) **Abstract**

A multi-remote control system for unmanned vehicles includes a processing device connected to and driving unmanned vehicles. The processing device has first and second receiving terminals, with the first terminal having higher control priority. A first control device links to the first terminal, and a second control device links to the second terminal. The first and second control devices can be configured as instructor and trainee controllers, respectively transmitting control commands to their terminals, enabling the processing device to generate control signals for the unmanned vehicle. This configuration supports instructional and multi-user control purposes, allowing trainees to operate through the second device while instructors provide teaching and intervene when necessary through the first device, ensuring operational safety. The system supports various controller types, enables updates, features multi-mode settings for device monitoring, and allows the first controller to display second controller commands and channel values, improving instructional efficiency and operational safety.

## Description

### BACKGROUND OF THE INVENTION

### 1. Fields of the invention

The present invention relates to a multi-remote control system for unmanned vehicles, and more particularly, to a system that allows multiple people to respectively control unmanned vehicles (such as aircraft, remote-controlled boats, etc.) through a first control device and a second control device, and through the setting of control priority, enables the first control device to forcibly intervene in the control of the unmanned vehicle, thereby achieving the purpose and effect of safe control for teaching.

### 2. Descriptions of Related Art

The Unmanned vehicles can be controlled through remote controllers to achieve entertainment purposes. With technological development, unmanned vehicles can also be used in technical fields such as aerial photography, surveying and mapping, logistics transportation, and military reconnaissance. Unmanned vehicles can be aircraft or remote-controlled boats, with the most commonly seen being quadcopters. A quadcopter is a multi-rotor aircraft device with four propellers that typically rotate in pairs (two clockwise, two counterclockwise) to maintain stable flight. Its advantages include simple structure, flexible maneuverability, and high stability. Its flight control relies on a flight controller (FC) system, which includes sensors such as accelerometers, gyroscopes, magnetometers, and barometers to maintain flight stability and control sensitivity. During flight, attitude adjustments are typically made through controllers or automatic control systems, such as pitch, roll, yaw, and throttle.

Current unmanned vehicle control is typically conducted through a single control device, which includes control joysticks and multiple input modules to transmit corresponding control commands to the unmanned vehicle, causing it to generate attitude changes (such as pitch, roll, yaw) and propulsion control. However, in educational settings, if students operate unmanned vehicles, they may cause improper operation of the unmanned vehicle due to insufficient operational experience or misjudgment, resulting in flight safety risks such as deviation, collision, or even crashes.

Some current teaching methods involve alternately transferring the controller between students and instructors during the teaching process. However, this method requires physical handover of the controller, which is not only difficult to switch but may also result in loss of real-time control over the unmanned vehicle due to inappropriate timing of the handover, leading to increased operational risks. Additionally, there are technologies that employ dual-person control for collaborative operation, but most are designed only for specific aircraft models or lack control priority mechanisms, resulting in the instructor's inability to intervene and correct in real-time when students make mistakes during operation, causing insufficient safety in unmanned vehicle operations.

Furthermore, although some current dual-control systems can perform signal switching, their switching methods are mostly manual control authority transfers, or they cannot monitor student control parameters in real-time, making it impossible to immediately grasp students' control behaviors and changes during the teaching process. If the control system cannot support multi-mode settings, it is also disadvantageous for adjustments and management according to actual teaching requirements, resulting in both overall teaching efficiency and flight safety needing improvement.

The present invention intends to provide a multi-remote control system for unmanned vehicles to eliminate the shortcomings mentioned above.

### SUMMARY OF THE INVENTION

The present invention relates to a multi-remote control system for unmanned vehicles, and comprises a processing device connected to and driving at least one unmanned vehicle. The processing device has a first receiving terminal and a second receiving terminal. The processing device defines that a control priority of the first receiving terminal is higher than that of the second receiving terminal. A first control device is signal-linked to the first receiving terminal. A second control device is signal-linked to the second receiving terminal. The first control device and the second control device respectively transmit a control command to the first receiving terminal and the second receiving terminal. The processing device correspondingly generates a control signal to correspondingly control the unmanned vehicle. When the first control device and the second control device simultaneously transmit the control commands, the processing device correspondingly receives the control command with higher control priority and transmits the control signal correspondingly.

Preferably, the processing device comprises a preset flight command for correspondingly executing the preset flight command when the control commands are not received, to correspondingly drive the unmanned vehicle.

Preferably, the first control device comprises a display screen, and the display screen correspondingly displays the control commands of the first control device or the second control device.

Preferably, the processing device further comprises a warning module for correspondingly presenting that the control signal is generated based on the control commands from the first control device or the second control device.

Preferably, the processing device comprises a processing unit which is correspondingly connected to the first receiving terminal and the second receiving terminal, and correspondingly parses the control commands to correspondingly generate the control signals.

Preferably, the processing device comprises a signal processing module which is connected to the processing unit, the first receiving terminal and the second receiving terminal. The signal processing module processes the signals of the control commands, so that the processing unit correspondingly parses the control commands after signal processing.

Preferably, the processing device comprises a program control module which is connected to the processing unit. The program control module is configured with multiple modes.

Preferably, the processing device comprises an update module which is connected to the processing unit and the program control module. The update module updates the processing unit and the program control module.

Preferably, the processing device comprises a reset module which is connected to the processing unit and the program control module. The reset module resets the processing unit and the program control module to initial settings.

Preferably, the processing device comprises a display device which correspondingly displays a connection status of the first control device or the second control device and the modes.

The present invention has the following advantages and effects, which are detailed as follows:
1. Through setting up first and second receiving terminals with control priority, and having the first control device correspondingly connected to the higher priority first receiving terminal and the second control device correspondingly connected to the second receiving terminal, the first control device is operated by the instructor to intervene in real-time during the teaching process. This forcibly replaces the control commands sent by the second control device operated by the trainee, effectively avoiding operational risks of the unmanned vehicle caused by improper trainee operation, and improving safety during the teaching process.
2. The first control device includes a display screen which displays the control command channel values input by the trainee, enabling the instructor to immediately grasp the trainee's operational behavior and parameter settings during the teaching process. This facilitates precise guidance and identification analysis of operational errors, thereby improving teaching efficiency and professionalism, and enabling control strategy switching through multi-mode settings to adjust control mechanisms corresponding to different course content or usage scenarios.
3. The present invention further supports display, update and reset modules, which not only provide real-time visualization information of operation modes and device connection status, but also enable version updates and parameter resets for the processing unit and program control module, enhancing the overall system's maintainability and flexibility. Through the present invention, whether in teaching or multi-operator collaborative control environments, the system can ensure stability and consistency during long-term operation.
4. Additionally, when the processing device of the present invention does not receive control commands from the first or second control devices, it can execute preset flight commands to maintain basic stability of the unmanned vehicle or safe return-to-home status, further reducing potential risks caused by operational errors or signal interruption, strengthening flight safety protection.
5. The present invention, through the configuration of the signal processing module, enables the present invention to be applicable to various brands and models of remote controllers, and can support multi-channel, multi-thread, and multi-channel value remote controller configurations. It also allows the control parameters of the first control device and second control device to match each other, thereby providing the present invention with broad support and applicability.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Figure 1 is a block diagram of the present invention;
Figure 2 is a perspective view of the processing device of the present invention;
Figure 3 is a top view of the processing device of the present invention, and
Figure 4 is a schematic diagram of the usage state of the present invention.

### DETAILED DESCRIPTION OF THE PREFERRED EMBODIMENT

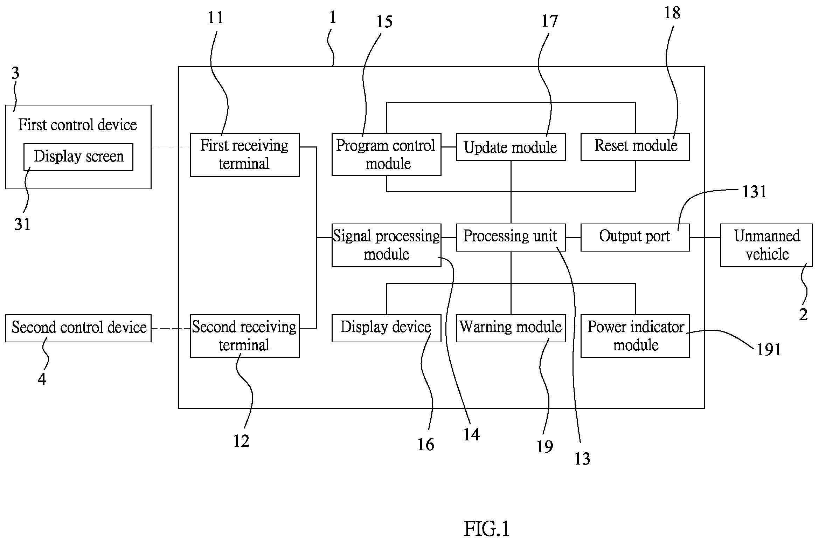

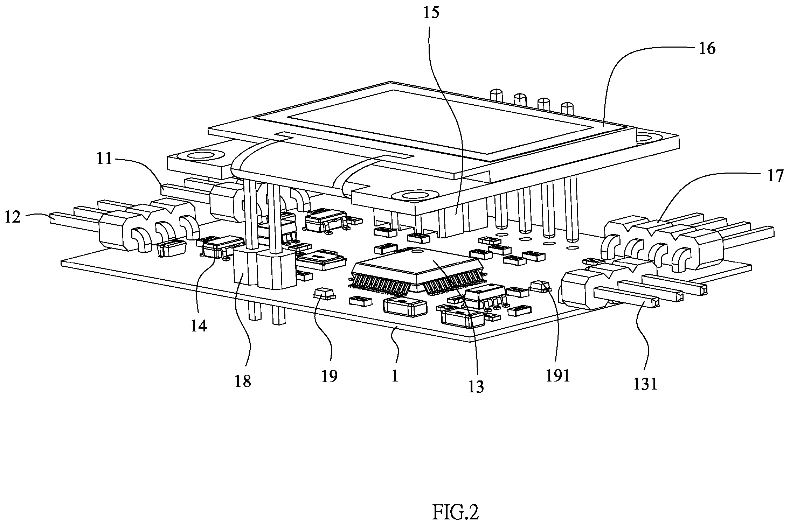

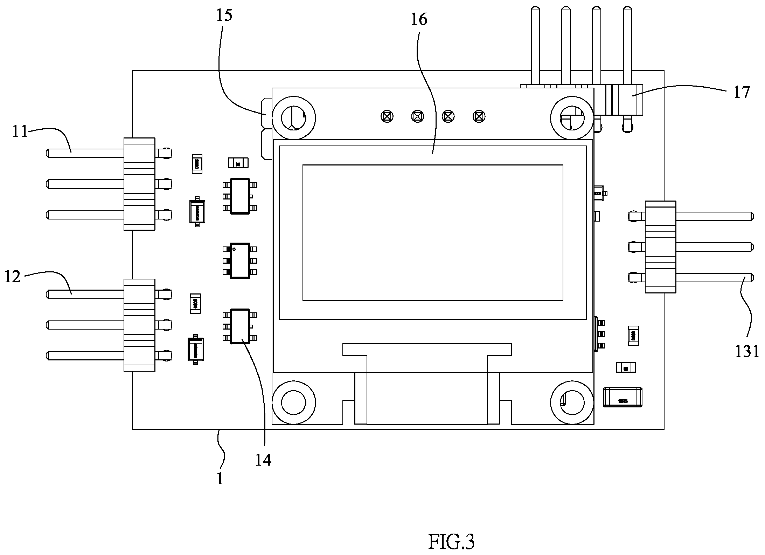

Referring to Figs. 1 to 4, the multi-remote control system for unmanned vehicles of the present invention comprises a processing device 1, which is used to connect to and drive at least one unmanned vehicle 2. The unmanned vehicle 2 in one embodiment can be configured as aircraft (such as drones), remote-controlled boats or remote-controlled vehicles, etc., which are merely illustrative examples and not intended as limitations. The processing device 1 is equipped with a first receiving terminal 11 and a second receiving terminal 12, which can be respectively configured as connection ports for connecting corresponding receivers, or can themselves be configured as receivers. The processing device 1 defines that a control priority of the first receiving terminal 11 is higher than that of the second receiving terminal 12.

A first control device 3 is signal-linked to the first receiving terminal 11. A second control device 4 is signal-linked to the second receiving terminal 12.

It can be understood that the first control device 3 and the second control device 4 correspond to remote controllers for the unmanned vehicle 2, and can be of the same or different models or brand configurations. The first control device 3 and the second control device 4 can respectively transmit at least one control command to the first receiving terminal 11 and the second receiving terminal 12, enabling the processing device 1 to correspondingly generate a control signal to correspondingly control the unmanned vehicle 2. It is known that the first control device 3 and the second control device 4 can be common wireless remote controllers, ground control stations, tablet controllers or other devices with signal transmission functions, and their transmission methods can include radio, Wi-Fi, Bluetooth and other various methods to correspondingly connect to the first receiving terminal 11 and the second receiving terminal 12. The control commands can be various control parameters for controlling the unmanned vehicle 2, such as movement in three-axis directions, speed, altitude and inclination angles in various axial directions, and can have various corresponding channel values to correspondingly control the behavior and attitude of the unmanned vehicle 2, which are merely illustrative examples and not intended as limitations.

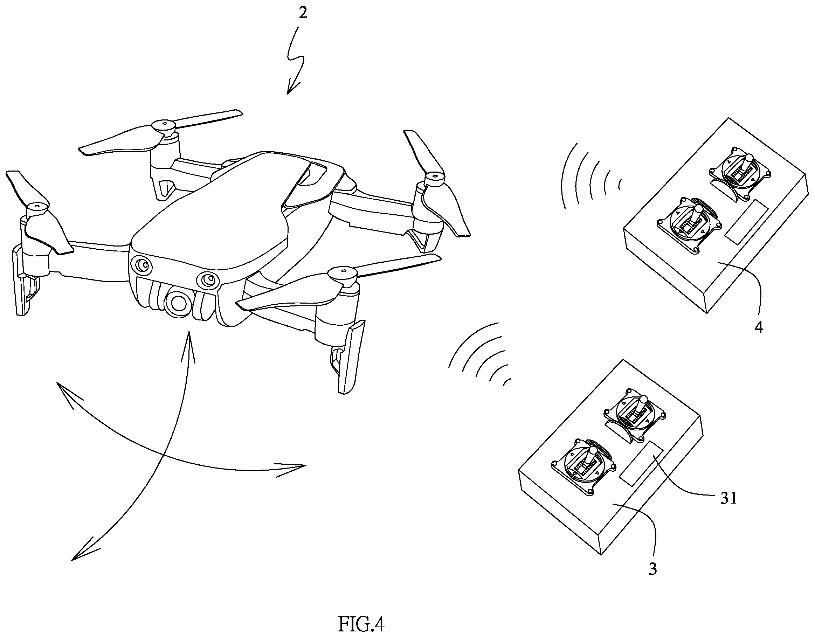

When the first control device 3 and the second control device 4 simultaneously transmit the control commands, the processing device 1 correspondingly receives the control command with higher control priority and transmits the corresponding control signal. According to this design, as shown in Figures 1 and 4, the first control device 3 in one embodiment can be an instructor controller, while the second control device 4 can be configured as a trainee controller. When the first control device 3 and the second control device 4 simultaneously input control commands, the processing device 1 will prioritize receiving the control commands input by the first control device 3 according to the control priority rules to correspondingly generate corresponding control signals, thereby enabling the present invention to provide the foundation for instructors to forcibly intervene in trainee operational behavior during the teaching process. Through this arrangement, during the teaching process, when the second control device 4 causes improper operation of the unmanned vehicle 2, the first control device 3 operated by the instructor can intervene in real-time, forcibly replacing the control commands sent by the second control device 4 operated by the trainee, effectively avoiding operational risks of the unmanned vehicle 2 caused by improper trainee operation and improving safety during the teaching process.

Regarding the monitoring of the second control device 4 by the first control device 3, the first control device 3 includes a display screen 31, which is used to display the control commands input by itself or the second control device 4 and their channel values, enabling the instructor to immediately grasp the trainee's operational content, such as parameters like roll, pitch, throttle, yaw channels, etc., which helps in providing guidance and corrections. Additionally, the display screen 31 can also present relevant information such as connection status to the processing device 1.

To further strengthen the safety mechanism, the processing device 1 is equipped with a preset flight command module that automatically executes preset flight behaviors, such as hovering, return-to-home, landing, etc., when the processing device 1 does not receive control commands from the first control device 3 or the second control device 4, to prevent the unmanned vehicle 2 from losing control due to signal interruption.

Regarding the specific configuration of the processing device 1, it includes a processing unit 13 for connecting the first receiving terminal 11 and the second receiving terminal 12, and correspondingly parsing the control commands received by each receiving terminal, then converting them into control signals that can control the unmanned vehicle 2. In one embodiment, the processing unit 13 can be configured as a single chip module (such as MCU, SoC) or composed of multiple processing elements to form a main chip for decoding operations, and can be developed through open source systems (such as Github).

To enhance the compatibility of the present invention with control command sources, the processing device 1 further includes a signal processing module 14, which is connected to the first receiving terminal 11, the second receiving terminal 12 and the processing unit 13, for performing signal processing on the received control commands, such as protocol conversion, signal range standardization, channel value interpretation, etc., to enable the processing unit 13 to correctly parse their content. This allows the present invention to be applicable to various brands and models of remote controllers, and can support multi-channel, multi-thread, and multi-channel value remote controller configurations, and also enables the control parameters of the first control device 3 and the second control device 4 to match each other, thereby providing the present invention with broad support and applicability.

In one embodiment, the processing device 1 further includes a program control module 15, which is connected to the processing unit 13 and configured with multiple modes, such as teaching mode, collaborative control mode, autonomous flight mode, etc., allowing users to select control logic according to scenarios. In one embodiment, the program control module 15 has a synchronization state that can synchronize the preset values, initial values or calibrated values of the control parameters of the first control device 3 and the second control device 4, enabling the first control device 3 and the second control device 4 to have the same basic parameters for control commands, avoiding control deviations for the unmanned vehicle 2 caused by different basic parameters when the same control commands are given.

Furthermore, to enhance overall system information transparency, the processing device 1 further includes a display device 16, which can be an LCD or OLED display screen. The modes can be visually presented through the display device 16, allowing users to confirm the current mode status in real-time. In one embodiment, the program control module 15 can also have a detection mode that can correspondingly detect the connection status of the first control device 3 or the second control device 4, enabling the display device 16 to correspondingly display the connection status of the first control device 3 or the second control device 4 and the modes. Through this arrangement, the display device 16 can display the connection status of the first control device 3 and the second control device 4, including successful connection, signal strength, channel matching status, etc., allowing operators to monitor system operation conditions and potential risks in real-time.

To enhance system maintenance and version compatibility capabilities, the processing device 1 further includes an update module 17, which is connected to the processing unit 13 and the program control module 15. It can perform firmware or parameter updates through external devices (such as USB), network connections or memory card reading methods, enabling updates and adjustments to the control logic and device types supporting the first control device 3 or the second control device 4.

The present invention further include a reset module 18, which is connected to the processing unit 13 and the program control module 15, for resetting the processing unit 13 and the program control module 15 to factory default values when system errors or reset requirements occur, maintaining the stability and consistency of system operation and avoiding system confusion caused by operational or update errors.

Additionally, the processing device 1 is equipped with a warning module 19 for presenting the current control authority source (i.e., control commands issued by the first control device 3 or the second control device 4), and can provide prompts through indicator lights, buzzer sounds or screen displays, allowing users to clearly identify the control source and status, avoiding confusion and enhancing operational safety.

Regarding other functional configurations, the processing device 1 can also correspondingly include a power indicator module 191, which can indicate on/off status or power level through indicator lights, enabling users to observe its operational status in real-time.

In one embodiment, the processing device 1 can be directly or indirectly configured on the unmanned vehicle 2. It can be understood that the processing device 1 can be equipped with an output port 131 at one end for connection and drive control of the unmanned vehicle 2. However, this is merely an illustrative example and not intended as a limitation.

In summary, the multi-remote control system for unmanned vehicles 2 provided by the present invention, through the first control device 3 and the second control device 4 respectively having different priority control mechanisms and combining multi-module collaborative operation, not only ensures safety and efficiency during the teaching process, but also possesses high system compatibility, operational flexibility and maintenance convenience, making it a highly practical and innovative unmanned vehicle 2 control technology.

While we have shown and described the embodiment in accordance with the present invention, it should be clear to those skilled in the art that further embodiments may be made without departing from the scope of the present invention.

## Claims

1. A multi-remote control system for unmanned vehicles, comprising:
a processing device (1) for connecting to and driving at least one unmanned vehicle (2);
the processing device (1) having a first receiving terminal (11) and a second receiving terminal (12), the processing device (1) defining that a control priority of the first receiving terminal (11) is higher than that of the second receiving terminal (12);
a first control device (3) signal-linked to the first receiving terminal (11), and
a second control device (4) signal-linked to the second receiving terminal (12), wherein the first control device (3) and the second control device (4) respectively transmit a control command to the first receiving terminal (11) and the second receiving terminal (12), so that the processing device (1) correspondingly generates a control signal to correspondingly control the unmanned vehicle (2), when the first control device (3) and the second control device (4) simultaneously transmit the control commands, the processing device (1) correspondingly receives the control command with higher control priority and transmits the control signal correspondingly.

2. The multi-remote control system for unmanned vehicles as claimed in claim 1, wherein the processing device (1) comprises a preset flight command for correspondingly executing the preset flight command when the control commands are not received, to correspondingly drive the unmanned vehicle (2).

3. The multi-remote control system for unmanned vehicles as claimed in claim 1, wherein the first control device (11) comprises a display screen (31), the display screen (31) correspondingly displays the control commands of the first control device (11) or the second control device (12).

4. The multi-remote control system for unmanned vehicles as claimed in claim 1, wherein the processing device (1) comprises a warning module (19) for correspondingly presenting that the control signal is generated based on the control commands from the first control device (11) or the second control device (12).

5. The multi-remote control system for unmanned vehicles as claimed in claim 1, wherein the processing device (1) comprises a processing unit (13) which is correspondingly connected to the first receiving terminal (11) and the second receiving terminal (12), and correspondingly parses the control commands to correspondingly generate the control signals.

6. The multi-remote control system for unmanned vehicles as claimed in claim 5, wherein the processing device (1) comprises a signal processing module (14) which is connected to the processing unit (13), the first receiving terminal (11) and the second receiving terminal (12), the signal processing module (14) processes the signals of the control commands, so that the processing unit (13) correspondingly parses the control commands after signal processing.

7. The multi-remote control system for unmanned vehicles as claimed in claim 5, wherein the processing device (1) comprises a program control module (15) which is connected to the processing unit (1), the program control module (15) is configured with multiple modes.

8. The multi-remote control system for unmanned vehicles as claimed in claim 7, wherein the processing device (1) comprises an update module (17) which is connected to the processing unit (13) and the program control module (15), the update module (17) updates the processing unit (13) and the program control module (15).

9. The multi-remote control system for unmanned vehicles as claimed in claim 8, wherein the processing device (1) comprises a reset module (18) which is connected to the processing unit (13) and the program control module (15), the reset module (18) resets the processing unit (13) and the program control module (15) to initial settings.

10. The multi-remote control system for unmanned vehicles as claimed in claim 7, wherein the processing device (1) comprises a display device (16), the display device (16) correspondingly displays a connection status of the first control device (3) or the second control device (4) and the modes.
